(19) Europäisches Patentamt
European Patent Office
Office européen des brevets

(11) **EP 3 299 789 A1**

(12) **EUROPEAN PATENT APPLICATION**

(43) Date of publication:
**28.03.2018 Bulletin 2018/13**

(51) Int Cl.:
***G01L 23/22*** *(2006.01)*

(21) Application number: **17191908.7**

(22) Date of filing: **19.09.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **21.09.2016 JP 2016183665**
**31.07.2017 JP 2017147389**

(71) Applicant: **NGK Spark Plug Co., Ltd.**
**Nagoya-shi,**
**Aichi 4678525 (JP)**

(72) Inventors:
- **HARADA, Hiroshi**
  **Nagoya-shi, Aichi 4678525 (JP)**
- **HIEI, Masanori**
  **Nagoya-shi, Aichi 4678525 (JP)**

(74) Representative: **J A Kemp**
**14 South Square**
**Gray's Inn**
**London WC1R 5JJ (GB)**

(54) **PRESSURE SENSOR**

(57)     [Object] To provide a technology for inhibiting reduction in the pressure detection accuracy of a sensor element included in a pressure sensor.

[Solution] A pressure sensor includes a metal shell, a movable member, a holder member, and a sensor element. The holder member includes a first straight portion, a second straight portion, and an intermediate portion. The cap includes a tapered portion and a cap straight portion. The pressure sensor satisfies $L1 \times (B1/A1) > 1.0$, where $L1$ is a distance between an intermediate front-end portion of the intermediate portion and a cap back-end portion of the cap in an axial direction, $A1$ is an area of a cross-section of a gap in a cross-section of the pressure sensor taken orthogonal to the axial direction at a position of the intermediate front-end portion, and $B1$ is a minimum area of a cross-section of the gap in a cross-section of the pressure sensor taken orthogonal to the axial direction in a region in front of the cap back-end portion.

FIG. 1

EP 3 299 789 A1

**Description**

The present invention relates to the technology of pressure sensors.

An example of a known pressure sensor includes a tubular metal shell that has a front-end opening and extends in an axial direction; a movable member disposed in the metal shell so as to project from the front end of the metal shell; a holder member that holds the movable member; and a sensor element that detects the pressure in a combustion chamber based on a displacement of the movable member in the axial direction (PTL 1). The movable member is disposed in the metal shell so that a gap is provided between the movable member and a cap of the metal shell in which the front-end opening is formed. The holder member is disposed in the gap.

PTL 1: Japanese Unexamined Patent Application Publication No. 2015-190689

In the pressure sensor according to the related art, soot generated in the combustion chamber may pass through the front-end opening and accumulate in the gap between the cap of the metal shell and the movable member. In particular, soot accumulation on the holder member, which holds the movable member, in the gap causes an increase in resistance to the movement of the movable member, and may lead to a reduction in the pressure detection accuracy of the sensor element. Therefore, there is a demand for a technology for inhibiting reduction in the pressure detection accuracy of the sensor element in the related art.

The present invention has been made in light of the above-described problems, and may be realized in the following embodiments or application examples.

(1) One embodiment of the present invention provides a pressure sensor for detecting a pressure in a combustion chamber of an internal combustion engine. The pressure sensor includes a tubular metal shell extending in an axial direction, and including a cap, which has a front-end opening; a movable member disposed in the metal shell so that a front portion of the movable member projects from the front-end opening, and the movable member forming a gap at least with the cap in such a manner that the movable member is movable relative to the metal shell in the axial direction; a holder member disposed in the gap, and connected to the movable member and the metal shell to hold the movable member; and a sensor element for detecting the pressure in the combustion chamber based on a displacement of the movable member in the axial direction. The holder member includes a first straight portion connected to the movable member, extending in the axial direction, and disposed at the front, a second straight portion connected to the metal shell, extending in the axial direction, and disposed at a back, and an intermediate portion that connects a back end of the first straight portion and a front end of the second straight portion and extends in a radial direction orthogonal to the axial direction. The cap includes a tapered portion having the front-end opening, expanding radially outward toward the back, and being capable of coming into contact with an attachment object to which the pressure sensor is to be attached, and a cap straight portion extending from a back end of the tapered portion toward the back in the axial direction. When the intermediate portion is moved toward the front in the axial direction, an intermediate front-end portion is defined as part of the intermediate portion that initially comes into contact with the cap, and a cap back-end portion is defined as part of the cap that initially comes into contact with the intermediate front-end portion, the following relationship is satisfied:

$$L1 \times (B1/A1) > 1.0$$

where L1 is a distance between the intermediate front-end portion and the cap back-end portion in the axial direction, A1 is an area of a cross-section of the gap in a cross-section of the pressure sensor taken orthogonal to the axial direction at a position of the intermediate front-end portion, and B1 is a minimum area of a cross-section of the gap in a cross-section of the pressure sensor taken orthogonal to the axial direction in a region in front of the cap back-end portion.

According to this embodiment, a large amount of combustion gas can be introduced into the gap. Therefore, the holder member in the gap can be maintained at a high temperature (for example, 200°C or higher). As a result, soot accumulation on the holder member can be reduced, and reduction in the pressure detection accuracy of the sensor element can be inhibited accordingly.

(2) In the above-described embodiment, the cap back-end portion may be provided on the tapered portion. A large amount of combustion gas can be introduced into the gap even when the tapered portion is provided in the pressure sensor. As a result, soot accumulation on the holder member can be reduced, and reduction in the pressure detection accuracy of the sensor element can be inhibited accordingly.

(3) In the above-described embodiment, the cap may include an opposing portion that projects radially inward from an inner peripheral surface of the cap straight portion at a position in front of the intermediate front-end portion. The cap back-end portion may be provided on the opposing portion, and B1 may be a minimum area of a cross-section of the gap in a cross-section of the pressure sensor taken orthogonal to the axial direction in a region occupied by the opposing portion in front of the cap back-end portion. Also when the opposing portion is provided, a large amount of combustion gas can be introduced into the gap. As a result, soot accumulation on the holder member can be reduced, and reduction in the pressure detection accuracy of the sensor element can be inhibited accordingly.

(4) In the above-described embodiment, the movable member may include a heater member that heats an inside of the combustion chamber of the internal combustion engine. According to this embodiment, the inside of the combustion chamber can be heated. Thus, the pressure sensor has an additional function of assisting combustion in the internal combustion engine.

The present invention may be realized in various embodiments. For example, the present invention may be realized not only as a pressure sensor but also as a pressure sensor manufacturing method and a vehicle in which the pressure sensor is mounted.

BRIEF DESCRIPTION OF THE DRAWINGS

Fig. 1 illustrates a pressure sensor.
Fig. 2 is a first sectional view of the pressure sensor illustrating a heater member.
Fig. 3 is a second sectional view of the pressure sensor illustrating a holder member.
Fig. 4 is a third sectional view of the pressure sensor illustrating a pressure detecting unit.
Fig. 5 is a fourth sectional view of the pressure sensor illustrating the holder member in a state in which the pressure sensor is attached to an engine head.
Fig. 6 further illustrates the pressure sensor.
Fig. 7 illustrates a pressure sensor according to a first modified example of the embodiment.
Fig. 8 illustrates a pressure sensor according to a second modified example of the embodiment.
Fig. 9 shows the result of an experiment regarding the pressure detection accuracies of pressure sensors.

A. Embodiment

A-1. Structure of Pressure Sensor 1

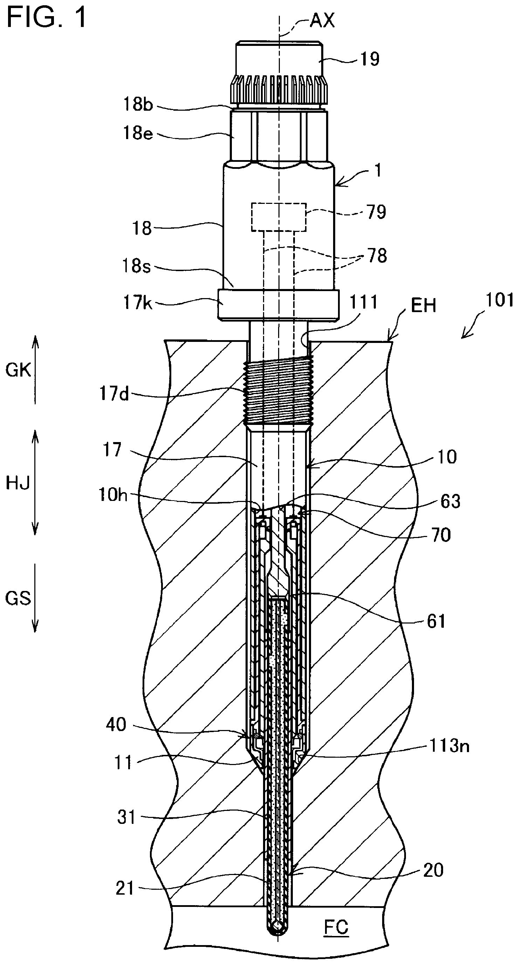

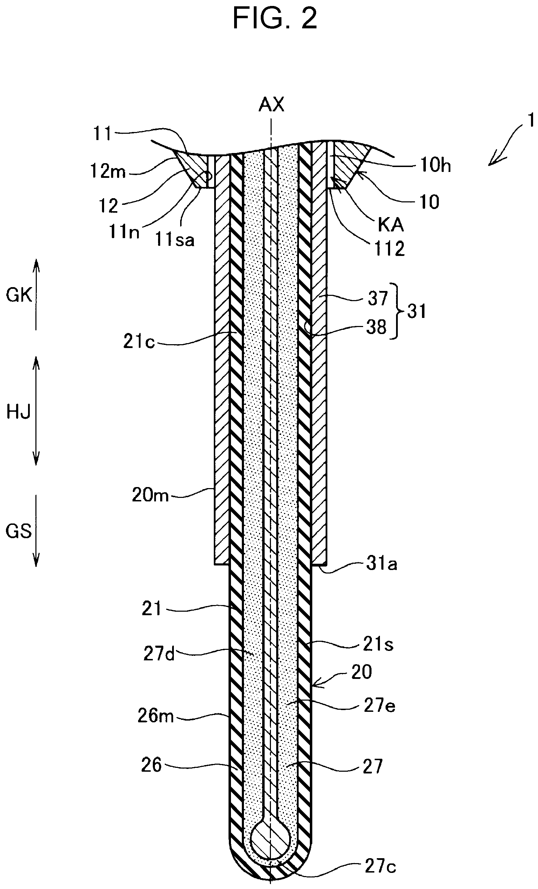

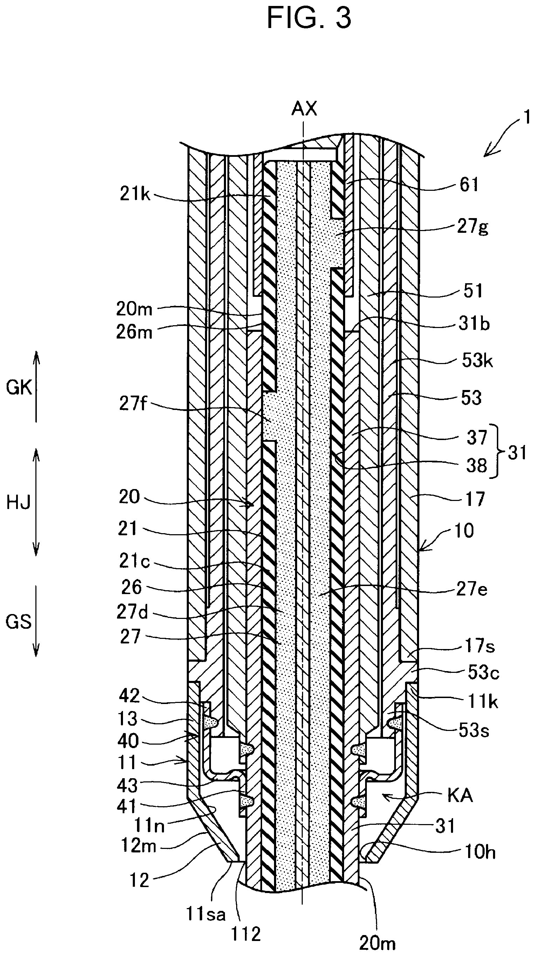

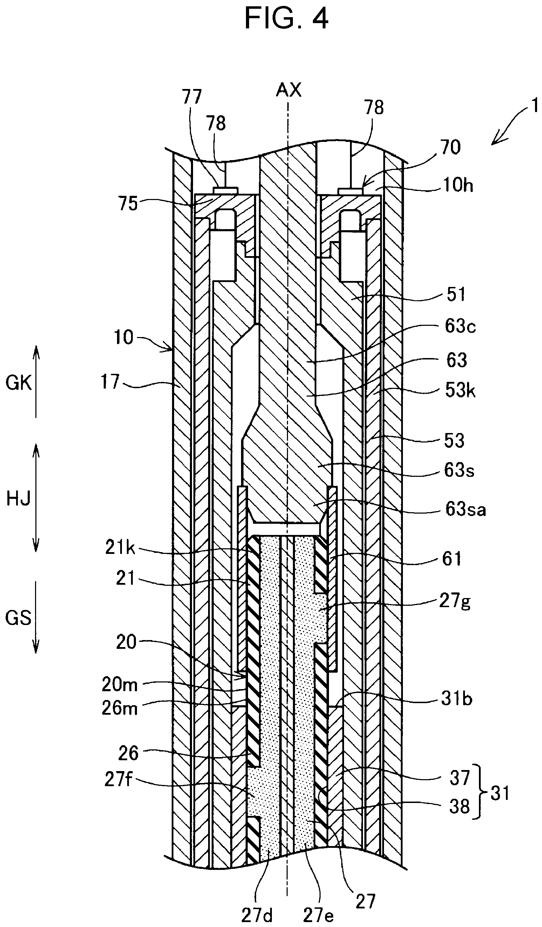

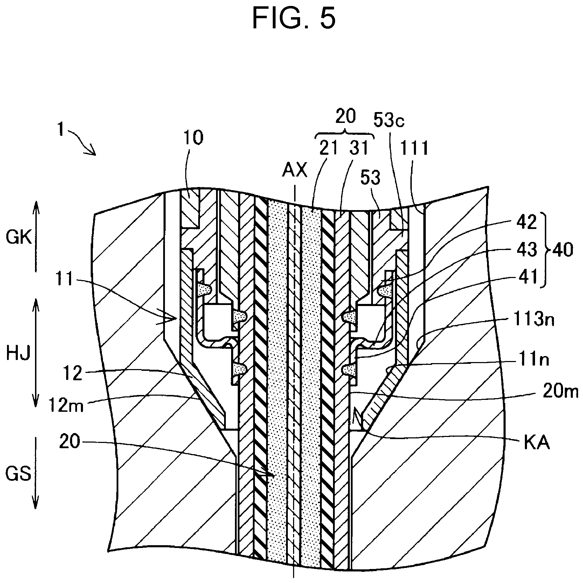

Fig. 1 illustrates a pressure sensor 1. Fig. 2 is a first sectional view of the pressure sensor 1 illustrating a heater member. Fig. 3 is a second sectional view of the pressure sensor 1 illustrating a holder member. Fig. 4 is a third sectional view of the pressure sensor 1 illustrating a pressure detecting unit. Fig. 5 is a fourth sectional view of the pressure sensor 1 illustrating the holder member in a state in which the pressure sensor 1 is attached to an engine head. In Figs. 1 to 5, the direction of an axial line AX of the pressure sensor 1 is defined as an axial direction HJ. One side in the axial direction HJ at which a heater member 20, which will be described below, is disposed (bottom in the figures) is defined as the front (GS), and the side opposite thereto (top in the figures) is defined as the back (GK).

The pressure sensor 1 (Fig. 1) is inserted in and fixed to a glow hole 111 formed in an engine head EH of a diesel engine 101, which is an internal combustion engine. The pressure sensor 1 is disposed in the engine head EH so that a front end portion thereof projects into a combustion chamber FC. The pressure sensor 1 is used to detect the pressure in the combustion chamber FC. A pressure detection signal obtained by the pressure sensor 1 is transmitted to an external device (for example, an ECU of a vehicle). The external device detects the pressure in the combustion chamber FC. The pressure sensor 1 is used to increase the fuel ignitability by increasing the temperature in the combustion chamber FC.

The pressure sensor 1 mainly includes a metal shell 10, a heater member 20, a holder member 40, and a pressure detecting unit 70.

The metal shell 10 (Fig. 3) includes a cap 11, which has a front-end opening 112, at the front thereof. The metal shell 10 is a tubular member that extends in the axial direction HJ. The metal shell 10 further includes a metal-shell back-end piece 18 (Fig. 1) and a metal-shell body 17 disposed between the cap 11 and the metal-shell back-end piece 18. The metal shell 10 is made of a metal (for example, stainless steel), and has a receiving hole 10h that extends therethrough in the axial direction HJ.

A back end portion 11k of the cap 11 and a front end portion 17s of the metal-shell body 17 are joined together (more specifically, welded together) with a flange portion 53c of a sensor support member 53, which will be described below, interposed therebetween (Fig. 3). As illustrated in Fig. 1, a back end portion 17k of the metal-shell body 17 and a front end portion 18s of the metal-shell back-end piece 18 are also joined together (more specifically, welded together).

The cap 11 (Fig. 3) includes a tapered portion 12 and a cap straight portion 13. The tapered portion 12 has the front-end opening 112 and expands radially outward (broadens) toward the back (GK). In the present embodiment, the tapered portion 12 has a tubular shape with a diameter that decreases toward the front (GS). The tapered portion 12 is capable of coming into contact with the engine head EH, which is an object to which the pressure sensor 1 is to be attached. More specifically, the tapered portion 12 has a tapered outer peripheral surface 12m that comes into contact with a seating portion 113n (Fig. 1) of the glow hole 111 when the pressure sensor 1 is attached to the engine head EH. Accordingly, the combustion chamber FC is airtight. A front end 11sa of the tapered portion 12 defines the front end of the metal shell 10.

The cap straight portion 13 extends from the back end of the tapered portion 12 toward the back (GK) in the axial direction HJ. The cap straight portion 13 has a tubular shape.

The metal-shell body 17 (Fig. 1) includes an attachment portion 17d at the back (GK) thereof. The attachment portion 17d includes an external thread used to attach the pressure sensor 1 to the engine head EH.

The metal-shell back-end piece 18 (Fig. 1) includes a tool engagement portion 18e at the back (GK) thereof. The tool engagement portion 18e has a hexagonal cross-section, and engages with a tool when the pressure sensor 1 is attached to the engine head EH. A cylindrical resin member 19, through which wires extend to the outside, is attached to the metal-shell back-end piece 18 so that the resin member 19 projects from a back end 18b of the metal-shell back-end piece 18 toward the back (GK). The back end 18b of the metal-shell back-end piece 18 defines the back end of the metal shell 10.

A front (GS) portion of the heater member 20 (see Figs. 2 and 3) projects from the front-end opening 112. The heater member 20 is disposed in the metal shell 10 (more specifically, in the receiving hole 10h) so that a gap KA is provided at least between the heater member 20 and the cap 11 in such a manner that the heater member 20 is movable relative to the metal shell 10 in the axial direction HJ. More specifically, the heater member 20 is held by the holder member 40, a displacement transmission member 51, and the sensor support member 53, which will be described below, so as to be movable in the axial direction HJ. The gap KA is an annular space formed at least between an inner peripheral surface 11n of the cap 11 and an outer peripheral surface 20m of the heater member 20.

The heater member 20 (Fig. 2) is a rod-shaped member that extends in the axial direction HJ. The heater member 20 corresponds to "movable member" in the claims. The heater member 20 includes a ceramic heater body 21 and a metal pipe 31. The ceramic heater body 21 is a circular rod-shaped heater made of a ceramic that extends in the axial direction HJ and that has a front end rounded into a hemispherical shape. The ceramic heater body 21 includes a base portion 26 and a heating resistor 27 embedded in the base portion 26. The base portion 26 extends in the axial direction HJ and is made of an insulating ceramic (more specifically, a silicon nitride ceramic). The heating resistor 27 is made of a conductive ceramic (more specifically, a silicon nitride ceramic containing tungsten carbide as a conductive component). The heating resistor 27 generates heat when electricity is supplied thereto.

The heating resistor 27 includes a heating portion 27c, a pair of lead portions 27d and 27e, and a pair of electrode lead-out portions 27f and 27g (Fig. 3). The heating portion 27c (Fig. 2) is disposed at the front (GS) and is bent into a U-shape. The heating portion 27c generates heat when electricity is supplied thereto. The lead portions 27d and 27e (Fig. 2) are connected to both ends of the heating portion 27c and extend parallel to each other toward the back (GK). The electrode lead-out portions 27f and 27g (Fig. 3) are connected to the lead portions 27d and 27e at the back (GK) and are exposed at an outer peripheral surface 26m of the base portion 26. One electrode lead-out portion 27g is in back (GK) of the other electrode lead-out portion 27f.

The metal pipe 31 (Figs. 2 and 3) is a metal member that extends in the axial direction HJ. The metal pipe 31 includes a metal pipe body 37 that is tubular and made of a metal (more specifically, stainless steel), and a metal layer 38 formed on an inner peripheral surface of the metal pipe body 37 by Au plating. The metal pipe 31 holds the ceramic heater body 21, which is press-fitted into the inside (radially inner space) thereof. More specifically, the metal pipe 31 holds the ceramic heater body 21 so that a body front-end portion 21s (see Fig. 2) of the ceramic heater body 21 projects beyond a front end 31a of the metal pipe 31 toward the front (GS), that a body back-end portion 21k (Fig. 4) of the ceramic heater body 21 projects beyond a back end 31b of the metal pipe 31 toward the back (GK), and that a body intermediate portion 21c (Figs. 2 and 3), which is provided between the body front-end portion 21s and the body back-end portion 21k, is disposed in an inner space of the metal pipe 31 in the radial direction. Accordingly, one electrode lead-out portion 27f of the ceramic heater body 21 is in contact with the metal layer 38 of the metal pipe 31, and is electrically connected to the metal pipe 31.

The body back-end portion 21k of the ceramic heater body 21 is connected to a center rod 63 (Fig. 4) by a connection ring 61 (Figs. 3 and 4). The connection ring 61 is a cylindrical member that extends in the axial direction HJ. The connection ring 61 is made of a metal (more specifically, stainless steel). The connection ring 61 is disposed inside the displacement transmission member 51 and the sensor support member 53, which will be described below, in the radial direction in the receiving hole 10h in the metal shell 10. The body back-end portion 21k of the ceramic heater body 21 is press-fitted to a front (GS) portion of the connection ring 61. A fitting portion 63sa of a center-rod front-end portion 63s of the center rod 63 is press-fitted to a back (GK) portion of the connection ring 61. Thus, one electrode lead-out portion 27g of the ceramic heater body 21 is electrically connected to the center rod 63 by the connection ring 61.

The center rod 63 (Fig. 4) is a circular rod-shaped member that extends in the axial direction HJ. The center rod 63 is made of a metal (more specifically, stainless steel). The center rod 63 is disposed in the receiving hole 10h in the metal shell 10 so as to be spaced from the metal shell 10. A front (GS) portion of the center rod 63 is disposed inside the displacement transmission member 51 and the sensor support member 53, which will be described below, in the radial direction so as to be spaced therefrom. The center rod 63 includes the center-rod front-end portion 63s, which has a large diameter, at the front (GS) thereof and a center-rod body portion 63c having a diameter smaller than that of the center-rod front-end portion 63s and that extends from the center-rod front-end portion 63s toward the back (GK).

The holder member 40 (Fig. 3) is a tubular member made of a metal (more specifically, a nickel alloy). The holder member 40 is disposed in the gap KA, which is the annular space between the inner peripheral surface of the metal shell 10 (more specifically, the inner peripheral surface 11n of the cap 11) and the outer peripheral surface 20m of the heater member 20. The gap KA is formed at least between the cap 11 and the heater member 20. The holder member 40 is held by the metal shell 10, and is welded to the metal pipe 31 of the heater member 20 at a position in front (GS) of the position at which the holder member 40 is held by the metal shell 10.

The holder member 40 (Fig. 5) is disposed in the gap KA so as to be connected to the heater member 20 and the metal shell 10, and holds the heater member 20. The holder member 40 includes a first straight portion 41, a second straight portion 42, and an intermediate portion 43.

The first straight portion 41 is connected to the heater member 20. The first straight portion 41 is disposed at the front (GS), and extends in the axial direction HJ. The first straight portion 41 is cylindrical, and is connected to the heater member 20 by being welded to the heater member 20 over the entire circumference in the circumferential direction.

The second straight portion 42 is connected to the metal shell 10. The second straight portion 42 extends in the axial direction HJ and is in back (GK) of the first straight portion 41. The second straight portion 42 is cylindrical, and the diameter of the second straight portion 42 is greater than that of the first straight portion 41. The second straight portion 42 is connected to the metal shell 10 by being externally fitted and welded to a support front-end portion 53s of the sensor support member 53 over the entire circumference in the circumferential direction. The sensor support member 53 is welded to the metal shell 10 over the entire circumference in the circumferential direction, as described below. Therefore, the second straight portion 42 of the holder member 40 is indirectly connected to the metal shell 10 by welding.

The intermediate portion 43 connects the back end of the first straight portion 41 to the front end of the second straight portion 42. The intermediate portion 43 extends in the radial direction orthogonal to the axial direction HJ. The phrase "extends in the radial direction" does not necessarily mean that the extending direction is parallel to the radial direction as long as the extending direction has a component in the radial direction. The intermediate portion 43 is a portion that is deformed in accordance with the displacement of the heater member 20 in the axial direction HJ. More specifically, the intermediate portion 43 is an annular plate-shaped diaphragm (thin film). The deformation of the intermediate portion 43 enables the heater member 20 to move in the axial direction HJ. The holder member 40 also electrically connects the metal pipe 31 to the metal shell 10. Therefore, the electrode lead-out portion 27f of the ceramic heater body 21 is electrically connected to the metal shell 10 through the metal pipe 31 and the holder member 40.

The pressure detecting unit 70 (Fig. 4) will now be described. The pressure detecting unit 70 is used to detect the pressure in the combustion chamber FC based on the displacement of the heater member 20 in the axial direction HJ. The pressure detecting unit 70 includes the displacement transmission member 51, the sensor support member 53, a diaphragm member 75, a sensor element 77, a pair of wires 78, and an integrated circuit 79 (Fig. 1).

The displacement transmission member 51 (see Figs. 3 and 4) is a tubular member that extends in the axial direction HJ and that is made of a metal (more specifically, stainless steel). The displacement transmission member 51 is disposed inside the sensor support member 53 in the radial direction in the receiving hole 10h in the metal shell 10 and is in back (GK) of the holder member 40. The displacement transmission member 51 is welded to the metal pipe 31 over the entire circumference in the circumferential direction. The diaphragm member 75 (Fig. 4) is connected to a back (GK) portion of the displacement transmission member 51.

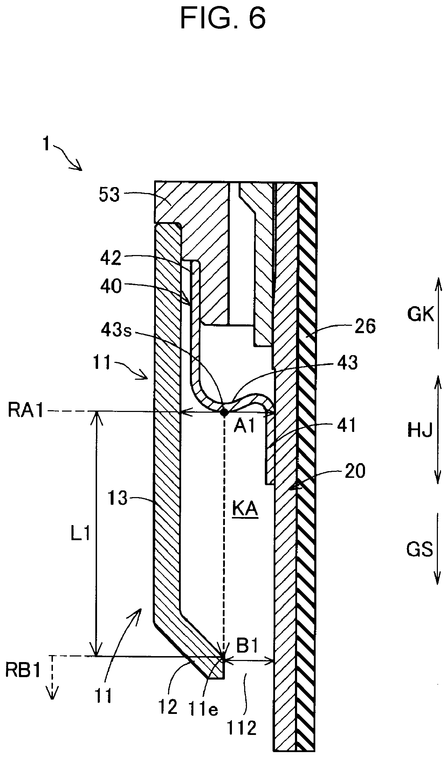

The sensor support member 53 (Figs. 5 and 6) is a tubular member that extends in the axial direction HJ and that is made of a metal (more specifically, stainless steel). The sensor support member 53 is disposed outside the displacement transmission member 51 in the radial direction in the receiving hole 10h in the metal shell 10. The sensor support member 53 (Fig. 3) includes the support front-end portion 53s, which is tubular, the flange portion 53c, which is in back (GK) of the support front-end portion 53s and has a large diameter, and a support body 53k, which is tubular and extends from the flange portion 53c toward the back (GK). A back (GK) portion of the holder member 40 is externally fitted and welded to the support front-end portion 53s. The flange portion 53c is welded to the metal shell 10 while being clamped between the back end portion 11k of the cap 11 at the front end of the metal shell 10 and the front end portion 17s of the metal-shell body 17. As illustrated in Fig. 4, the diaphragm member 75 is connected to a back (GK) portion of the support body 53k.

The diaphragm member 75 (Fig. 4) is made of a metal (more specifically, stainless steel), and the sensor element 77 is joined to a back (GK) principal surface thereof. The sensor element 77 is a semiconductor strain gauge including a piezoelectric resistor, and the resistance value thereof varies in accordance with bending deformation of the diaphragm member 75. In addition, as shown by the broken lines in Fig. 1, the integrated circuit 79 is disposed in the metal-shell back-end piece 18 of the metal shell 10, and is connected to the sensor element 77 by the pair of wires 78 that extend from the sensor element 77 toward the back (GK). The integrated circuit 79 outputs an electric signal (pressure detection signal) representing the resistance value of the sensor element 77 to the outside (for example, an ECU). As described above, the electric signal output by the sensor element 77 is used to detect the pressure in the combustion chamber FC based on the displacement of the heater member 20 in the axial direction HJ.

Fig. 6 further illustrates the pressure sensor 1. An intermediate front-end portion 43s is defined as part of the intermediate portion 43 that initially comes into contact with the cap 11 when the intermediate portion 43 is moved toward the front (GS) in the axial direction HJ. The phrase "the intermediate portion 43 is moved toward the front (GS) in the axial direction HJ" means that the intermediate portion 43 is moved downward in Fig. 6 in a direction parallel to the axial direction HJ. A cap back-end portion 11e is defined as part of the cap 11 that initially comes into contact with the intermediate front-end portion 43s when the intermediate portion 43 is moved toward the front (GS) in the axial direction HJ. In the present embodiment, the cap back-end portion 11e is provided on the tapered portion 12. The distance between the intermediate front-end portion 43s and the cap back-end portion 11e in the axial direction HJ is denoted by L1. The area of the cross-section of the gap KA in the cross-section of the pressure sensor 1 taken orthogonal to the axial direction HJ at a position RA1 of the intermediate front-end portion 43s is denoted by A1. The minimum area of the cross-section of the gap KA in the cross-section of the pressure sensor 1 taken orthogonal to the axial direction HJ in a region RB1 in front of the cap back-end portion 11e is denoted by B1. In the present embodiment, the cross-sectional area B1 is obtained at a position that is near the front-end opening 112 of the cap 11 and differs from the position of the cap back-end portion 11e. Although Fig. 6 shows the cross-sectional areas A1 and B1 of a portion of the gap KA, the cross-sectional areas A1 and B1 are the areas of cross-sections of the gap KA over the entire circumference in the circumferential direction. The pressure sensor 1 is configured such that L1, A1, and B1 satisfy $L1 \times (B1/A1) > 1.0$. Accordingly, reduction in the pressure detection accuracy of the sensor element 77 can be inhibited. The reason for this will be described below. The pressure sensor 1 is preferably configured such that L1, A1, and B1 satisfy $L1 \times (B1/A1) \leq 10.0$. When $L1 \times (B1/A1) > 10.0$, the size of the cap 11 is large, and there is a risk that the strength of the pressure sensor 1 will be reduced. In addition, the combustion gas approaches the electrode lead-out portions 27f and 27g of the heater member 20 (heating resistor 27), and therefore there is a risk that the electrical conductivity of the heater member 20 will be reduced. The value of $L1 \times (B1/A1)$ is also referred to as the value of Va. A-2. Modified Examples of Pressure Sensor

The tapered portion 12 of the cap 11 of the pressure sensor 1 according to the embodiment has a tapered tubular shape such that the thickness thereof is constant and the diameter thereof decreases toward the front (GS). However, the shape of the tapered portion 12 is not limited to this as long as the tapered portion 12 has the front-end opening 112 and expands radially outward toward the back (GK). In addition, the cap straight portion 13 of the pressure sensor 1 according to the embodiment has a tubular shape with a constant thickness. However, the shape of the cap straight portion 13 is not limited to this as long as the cap straight portion 13 extends from the back end of the tapered portion 12 toward the back (GK) in the axial direction HJ. Modified Examples of the pressure sensor will now be described.

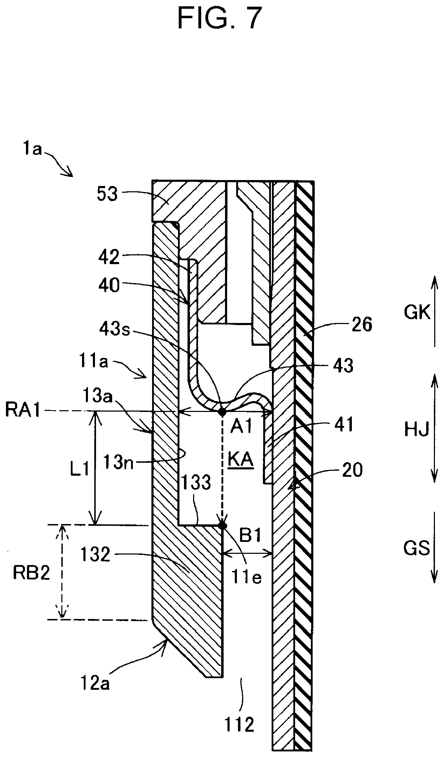

Fig. 7 illustrates a pressure sensor 1a according to a first modified example of the embodiment. The difference between the pressure sensor 1a and the pressure sensor 1 of the embodiment is the shape of a front (GS) portion of a cap straight portion 13a of a cap 11a and the shape of a tapered portion 12a of the cap 11a. Other structures of the pressure sensor 1a of the present modified example are similar to those of the pressure sensor 1 according to the embodiment. Therefore, similar elements are denoted by the same reference numerals, and description thereof is omitted.

The cap straight portion 13a extends from the back end of the tapered portion 12a toward the back (GK) in the axial direction HJ. The front (GS) portion of the cap straight portion 13a has a smaller inner diameter and a greater thickness than a back (GK) portion of the cap straight portion 13a. The portion of the cap straight portion 13a having a greater thickness is referred to as a thick portion 132.

The tapered portion 12a has a front-end opening 112, and expands radially outward toward the back (GK). In other words, the outer diameter of the tapered portion 12a increases toward the back (GK). The inner diameter of the tapered portion 12a is constant, and the thickness of the tapered portion 12a increases toward the back (GK).

In the pressure sensor 1a illustrated in Fig. 7, similar to the pressure sensor 1 (Fig. 6), an intermediate front-end portion 43s is defined as part of the intermediate portion 43 that comes into contact with the cap 11a first if the intermediate portion 43 is moved toward the front (GS) in the axial direction HJ. Also, a cap back-end portion 11e is defined as part of the cap 11a that comes into contact with the intermediate front-end portion 43s. In the pressure sensor 1a, the cap back-end portion 11e is provided on an end surface 133 at the back (GK) of the thick portion 132. The end surface 133 having the cap back-end portion 11e projects radially inward from an inner peripheral surface 13n of the cap straight portion 13a. The end surface 133 is in front (GS) of the intermediate front-end portion 43s. The end surface 133 corresponds to "opposing portion" described in the Summary of the Invention section.

Similar to the above-described embodiment, the distance between the intermediate front-end portion 43s and the cap back-end portion 11e in the axial direction HJ is denoted by L1. In addition, similar to the above-described embodiment, the area of the cross-section of the gap KA in the cross-section of the pressure sensor 1a taken orthogonal to the axial direction HJ at the position RA1 of the intermediate front-end portion 43s is denoted by A1. Unlike the above-described embodiment, when the cap straight portion 13a includes the "opposing portion", the cross-sectional area B1 is defined as the minimum area of the cross-section of the gap KA in the cross-section of the pressure sensor 1a taken orthogonal to the axial direction HJ in a region RB2 occupied by the "opposing portion" in front of the cap back-end portion 11e. In the first modified example, the cross-sectional area B1 is obtained at a position that is at the front of the cap straight portion 13a and that differs from the position of the cap back-end portion 11e. Although Fig. 7 shows the cross-sectional areas A1 and B1 of a portion of the gap KA, the cross-sectional areas A1 and B1 are the areas of cross-sections of the gap KA over the entire circumference in the circumferential direction. The pressure sensor 1a is configured such that L1, A1, and B1 satisfy $L1 \times (B1/A1) > 1.0$. Accordingly, reduction in the pressure detection accuracy of the sensor element 77 can be inhibited. The reason for this will be described below. Similar to the above-described embodiment, the pressure sensor 1a is preferably configured such that L1, A1, and B1 satisfy $L1 \times (B1/A1) \leq 10.0$.

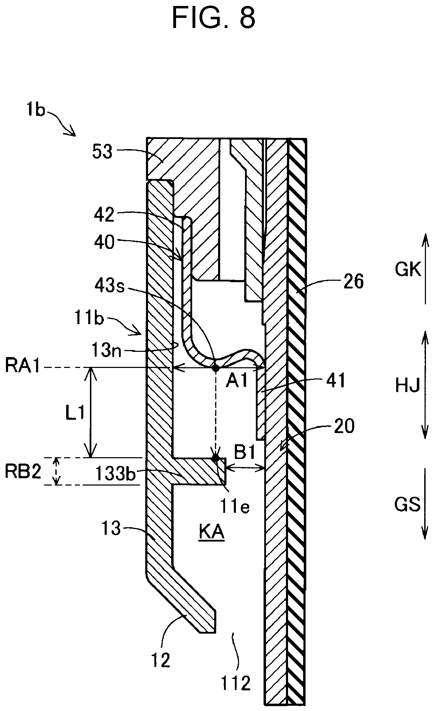

Fig. 8 illustrates a pressure sensor 1b according to a second modified example of the embodiment. The pressure sensor 1b differs from the pressure sensor 1 of the embodiment in that a cap 11b includes an opposing portion 133b. Other structures of the pressure sensor 1b of the present modified example are similar to those of the pressure sensor 1 according to the embodiment. Therefore, similar elements are denoted by the same reference numerals, and description thereof is omitted.

The cap straight portion 13 extends from the back end of the tapered portion 12 toward the back (GK) in the axial direction HJ. The cap 11b includes the opposing portion 133b, which projects radially inward from the inner peripheral surface 13n of the cap straight portion 13. The opposing portion 133b has an annular shape and extends over the entire circumference of the inner peripheral surface 13n. The opposing portion 133b is in front (GS) of the intermediate front-end portion 43s.

In the pressure sensor 1b illustrated in Fig. 8, similar to the pressure sensor 1 (Fig. 6), an intermediate front-end portion 43s is defined as part of the intermediate portion 43 that initially comes into contact with the cap 11b if the intermediate portion 43 is moved toward the front (GS) in the axial direction HJ. Also, a cap back-end portion 11e is defined as part of the cap 11b that initially comes into contact with the intermediate front-end portion 43s. In the pressure sensor 1b, the cap back-end portion 11e is provided on the opposing portion 133b.

Similar to the above-described embodiment, the distance between the intermediate front-end portion 43s and the cap back-end portion 11e in the axial direction HJ is denoted by L1. In addition, similar to the above-described embodiment, the area of the cross-section of the gap KA in the cross-section of the pressure sensor 1b taken orthogonal to the axial direction HJ at the position RA1 of the intermediate front-end portion 43s is denoted by A1. Similar to the above-described first modified example, the opposing portion 133b is provided on the cap straight portion 13. Accordingly, the cross-sectional area B1 is defined as the minimum area of the cross-section of the gap KA in the cross-section of the pressure sensor 1b taken orthogonal to the axial direction HJ in a region RB2 occupied by the opposing portion 133b in front of the cap back-end portion 11e. In the second modified example, the cross-sectional area B1 is obtained at a position that is at the front of the opposing portion 133b and differs from the position of the cap back-end portion 11e. Although Fig. 8 shows the cross-sectional areas A1 and B1 of a portion of the gap KA, the cross-sectional areas A1 and B1 are the areas of cross-sections of the gap KA over the entire circumference in the circumferential direction. The pressure sensor 1b is preferably configured such that L1, A1, and B1 satisfy $L1 \times (B1/A1) > 1.0$. In such a case, reduction in the pressure detection accuracy of the sensor element 77 can be inhibited. The reason for this will be described below. Similar to the above-described embodiment, the pressure sensor 1b is preferably configured such that L1, A1, and B1 satisfy $L1 \times (B1/A1) \leq 10.0$.

A-3. Examples

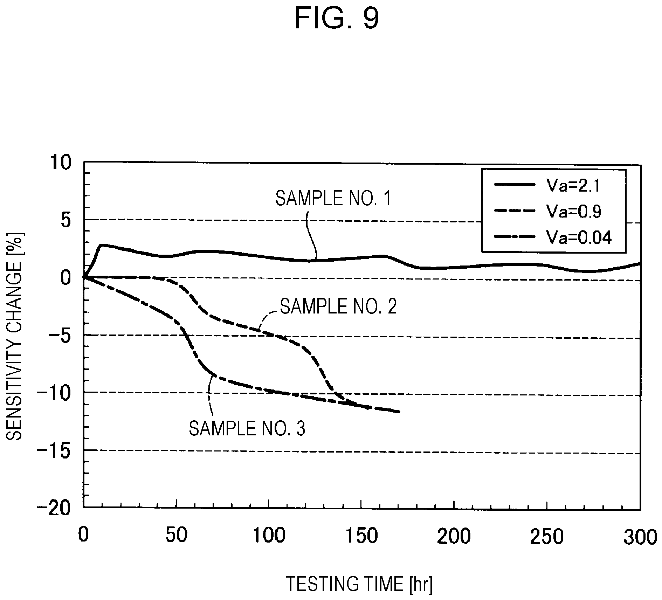

Fig. 9 shows the result of an experiment regarding the pressure detection accuracies of the pressure sensors 1, 1a, and 1b. The experiment is performed on samples of pressure sensors numbered No. 1, No. 2, and No. 3. The pressure sensors of Sample No. 1 and Sample No. 2 are the pressure sensor 1 according to the embodiment. The pressure sensor of Sample No. 3 is the pressure sensor 1a according to the first modified example. The value of Va, that is, $L1 \times (B1/A1)$, of the pressure sensor 1 of Sample No. 1 is 2.1. The value of Va of the pressure sensor 1 of Sample No. 2 is 0.9, and the value of Va of Sample No. 3 is 0.04.

The experiment is performed as follows. First, the pressure sensors 1 and 1a of Sample No. 1 to Sample No. 3 are attached to a chamber that simulates the combustion chamber FC. Plural pressure sensors are prepared for each sample. The ambient gas in the chamber is switched between a first ambient gas, which contains a large amount of soot, and a second ambient gas, which contains a large amount of hydrocarbon (HC), at predetermined intervals so that the first ambient gas and the second ambient gas are repeatedly supplied. The pressure sensors 1 and 1a of Sample No. 1 to Sample No. 3 are taken out each time a predetermined time elapses (for example, every 50 hours), and a change in the pressure sensitivity of the sensor element 77 is calculated. The horizontal axis in Fig. 9 represents testing time, which is the total time for which the pressure sensors of Sample No. 1 to Sample No. 3 are attached to the chamber and exposed to the first ambient gas and the second ambient gas.

The method for calculating the sensitivity change will be described. A reference sensor, which is a pressure sensor produced by Kistler (model 6056A), and the pressure sensors of Sample No. 1 to Sample No. 3 are attached to the same cylinder, and the pressure is detected by the sensor element 77 under the engine conditions described below. The sensitivity change (%) is calculated for each of Sample No. 1 to Sample No. 3 by using Equation (1) based on detected pressure values Vb obtained by the pressure sensors 1 and 1a of Sample No. 1 to Sample No. 3 and a detected pressure value Vs obtained by the reference sensor.

$$\text{Sensitivity Change (\%) = (Vb-Vs)} \times 100/\text{Vs} \qquad (1)$$

The sensitivity change represents the degree to which the detected pressure values Vb of Sample No. 1 to Sample No. 3 differ from the detected pressure value Vs of the reference sensor. The detection accuracy decreases as the sensitivity change increases (that is, as the sensitivity change becomes higher or lower than 0%).

Engine Conditions

Displacement: 3000 cc, In-Line Four Cylinder Engine, Rotational Speed: 1000 rpm, Torque: 60 Nm

As illustrated in Fig. 9, with regard to Sample No. 1, which has a value Va greater than 1.0, the sensitivity change is lower than or equal to 5% irrespective of the testing time, and reduction in the pressure detection accuracy of the sensor element 77 is inhibited. With regard to each of Sample No. 2 and Sample No. 3, which have a value Va of 1.0 or less, the sensitivity change is lower than -5% (the absolute value thereof exceeds 5%) when the testing time exceeds 100 hours, and the pressure detection accuracy of the sensor element 77 is reduced. Therefore, the pressure sensors 1, 1a, and 1b preferably satisfy L1×(B1/A1) > 1.0. This is because when the pressure sensors 1, 1a, and 1b satisfy L1×(B1/A1) > 1.0, the amount of combustion gas introduced into the gap KA can be increased. Accordingly, the holder member 40 can be maintained at a high temperature (for example, 200°C or higher) in the gap KA. When the holder member 40 is maintained at a high temperature in the gap KA, accumulation of soot on the holder member 40 can be reduced. A probable reason why the soot accumulation can be reduced will be described hereinafter. Since the holder member 40 is maintained at a high temperature, oil contained in unburned gas, which enters the gap KA through the front-end opening 112 and contains a large amount of oil, can be evaporated. Therefore, the oil, which serves as an adhesive that causes the soot to adhere to the holder member 40, does not easily adhere to the holder member 40. As a result, adhesion of the soot to the holder member 40 can be reduced. B. Modifications

The present invention is not limited by the above-described embodiment, and may be realized in various embodiments without departing from the gist of the invention. B-1. First Modification

In the above-described embodiment, the heater member 20 includes the base portion 26, which is made of an insulating ceramic, and the heating resistor 27, which is embedded in the base portion 26 and made of a conductive ceramic that generates heat when electricity is supplied thereto. However, the heater member 20 is not limited by the embodiment as long as the heater member 20 includes a portion that generates heat when electricity is supplied thereto. For example, the heater member 20 may instead include a sheath tube that extends in the axial direction HJ and that is closed at the front end and a heating resistor made of a metal coil that is disposed in the sheath tube and electrically connected to the front end of the sheath tube. Alternatively, for example, a rod-shaped movable member that does not have a heating function may be used instead of the heater member 20.

The present invention is not limited to the above-described embodiment, examples, and modifications, and maybe embodied in various forms without departing from the scope thereof as defined by the claims. For example, the technical features of the embodiment, examples, and modifications corresponding to the technical features according to the embodiments described in the Summary of the Invention section may be replaced or combined as appropriate to solve some or all of the above-described problems or obtain some or all of the above-described effects. The technical features may also be omitted as appropriate unless they are described as essential in this specification.

**Claims**

1. A pressure sensor (1, 1a, 1b) for detecting a pressure in a combustion chamber (FC) of an internal combustion engine (101), the pressure sensor (1, 1a, 1b) comprising:

a tubular metal shell (10) extending in an axial direction (HJ), and including a cap (11) which has a front-end opening (112);

a movable member (20) disposed in the metal shell (10) so that a front portion of the movable member (20) projects from the front-end opening (112), and the movable member (20) forming a gap (KA) at least with the cap (11) in such a manner that the movable member (20) is movable relative to the metal shell (10) in the axial direction (HJ);

a holder member (40) disposed in the gap (KA) and connected to the movable member (20) and the metal shell (10) to hold the movable member (20); and

a sensor element (77) for detecting the pressure in the combustion chamber (FC) based on a displacement of the movable member (20) in the axial direction (HJ),

wherein the holder member (40) includes

a first straight portion (41) connected to the movable member (20), extending in the axial direction (HJ), and disposed at the front (GS),

a second straight portion (42) connected to the metal shell (10), extending in the axial direction (HJ), and disposed at a back (GK), and

an intermediate portion (43) that connects a back end of the first straight portion (41) and a front end of the second straight portion (42) and extends in a radial direction orthogonal to the axial direction (HJ),

wherein the cap (11) includes

a tapered portion (12) having the front-end opening (112), expanding radially outward toward the back (GK), and being capable of coming into contact with an attachment object (EH) to which the pressure sensor (1, 1a, 1b) is to be attached, and

a cap straight portion (13) extending from a back end of the tapered portion (12) toward the back (GK) in the axial direction (HJ), and

wherein, when the intermediate portion is moved toward the front in the axial direction, an intermediate front-end portion (43s) is defined as part of the intermediate portion (43) that initially comes into contact with the cap (11) and a cap back-end portion (11e) is defined as part of the cap (11) that initially comes into contact with the intermediate front-end portion (43s), the following relationship is satisfied:

$$L1 \times (B1/A1) > 1.0$$

where L1 is a distance between the intermediate front-end portion (43s) and the cap back-end portion (11e) in the axial direction (HJ),

A1 is an area of a cross-section of the gap (KA) in a cross-section of the pressure sensor (1, 1a, 1b) taken orthogonal to the axial direction (HJ) at a position (RA1) of the intermediate front-end portion (43s), and

B1 is a minimum area of a cross-section of the gap (KA) in a cross-section of the pressure sensor (1, 1a, 1b) taken orthogonal to the axial direction (HJ) in a region (RB1, RB2) in front of the cap back-end portion (11e).

2. The pressure sensor (1) according to Claim 1,
wherein the cap back-end portion (11e) is provided on the tapered portion (12).

3. The pressure sensor (1a, 1b) according to Claim 1, wherein the cap (11) includes an opposing portion (133, 133b) that projects radially inward from an inner peripheral surface of the cap straight portion (13) at a position in front of the intermediate front-end portion (43s),
wherein the cap back-end portion (11e) is provided on the opposing portion (133, 133b), and
wherein B1 is a minimum area of a cross-section of the gap (KA) in a cross-section of the pressure sensor (1a, 1b) taken orthogonal to the axial direction (HJ) in a region (RB2) occupied by the opposing portion (133, 133b) in front of the cap back-end portion (11e).

4. The pressure sensor (1, 1a, 1b) according to any one of Claims 1 to 3, wherein the movable member (20) includes a heater member (21) that heats an inside of the combustion chamber (FC) of the internal combustion engine (101) .

# FIG. 1

# FIG. 2

FIG. 3

# FIG. 4

# FIG. 5

# FIG. 6

# FIG. 7

# FIG. 8

# FIG. 9

Europäisches
Patentamt

European
Patent Office

Office européen
des brevets

## EUROPEAN SEARCH REPORT

Application Number

EP 17 19 1908

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2015 190689 A (NGK SPARK PLUG CO) 2 November 2015 (2015-11-02) * claim 1; figure 5 * | 1-4 | INV. G01L23/22 |
| X | EP 2 559 943 A1 (NGK SPARK PLUG CO [JP]) 20 February 2013 (2013-02-20) * claim 1; figure 2 * | 1-4 | |

TECHNICAL FIELDS
SEARCHED (IPC)

G01L

The present search report has been drawn up for all claims

| Place of search | Date of completion of the search | Examiner |
|---|---|---|
| The Hague | 26 January 2018 | Cilissen, Marcel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 19 1908

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2018

| Patent document cited in search report | | Publication date | Patent family member(s) | Publication date |
|---|---|---|---|---|
| JP 2015190689 | A | 02-11-2015 | NONE | |
| EP 2559943 | A1 | 20-02-2013 | EP    2559943 A1 | 20-02-2013 |
| | | | JP    5911399 B2 | 27-04-2016 |
| | | | JP 2013061145 A | 04-04-2013 |
| | | | KR 20130020878 A | 04-03-2013 |
| | | | US 2013042831 A1 | 21-02-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015190689 A